# FASCICULE DE BREVET EUROPEEN

(11) **EP 0 988 489 B1**
(45) Date de publication et mention de la délivrance du brevet: **28.11.2001**
(21) Numéro de dépôt: 98930848.1
(22) Date de dépôt: 12.06.1998
(51) Int. Cl.: F16L 55/12, F16K 7/10

(54) **STRUCTURES SOUPLES GONFLABLES**
FLEXIBLE, AUFBLASBARE STRUKTUREN
FLEXIBLE INFLATABLE STRUCTURES

(30) Priorité: 13.06.1997 FR 9707457
(43) Date de publication de la demande: 29.03.2000
(73) Titulaire: S.E.I.B. S.A.R.L., 51110 Reims (FR)
(72) Inventeur: CASTAGNER, Bernard, 77700 Coupvray (FR); BOYAULT, Jean-Pierre, 77185 Lognes (FR)
(74) Mandataire: Desrousseaux, Grégoire Marie
(86) Numéro de dépôt international: FR9801233
(87) Numéro de publication internationale: WO9857093

(56) Documents cités:
- FR-A- 2 748 543
- GB-A- 2 100 830
- US-A- 2 598 207
- US-A- 3 459 230

## Description

Dans les domaines industriels et de la vie courante et en particulier, pour résoudre les problèmes liés à la sécurité des personnes, de l'environnement, des biens matériels, on a eu l'idée d'utiliser des structures souples étanches et gonflables à l'aide d'un compresseur ou d'une bouteille de gaz sous pression.

Si ces systèmes présentent de nombreux avantages, ils ont aussi quelques inconvénients importants, qui selon les cas sont :
- Masse et encombrement élevés de la source de gaz.
- Problèmes logistiques et encombrement des liaisons de transmission des gaz de la source à la structure à gonfler.
- Délais de mise en oeuvre.
- Coût des équipements et éventuellement des infrastructures nécessaires à leur accueil et protection.

US-A-2 598 207 décrit un élément d'obturation du passage de fluide dans une conduite qui comprend un sac gonflable fixé à l'intérieur de la conduite. Le sac est muni d'une valve fixée sur la paroi de la conduite de fluide qui est branchée, du côté extérieur de la conduite, à un tube relié à une source d'air comprimé afin de permettre son gonflage. Lorsque le sac est dégonflé, le passage à travers la conduite est libre ; au contraire, le sac gonflé obture le passage à travers la conduite.

Les structures souples étanches gonflables par générateurs de gaz pyrotechniques, objet de la présente invention telle que définie dans la revendication indépendante, repondent à ces inconvénients.

Les structures souples étanches gonflables par générateurs de gaz pyrotechniques sont principalement constituées de :
a) une poche, uni ou multicellulaire, réalisée préferentiellement en tissus enduits.
b) une structure préférentiellement rigide servant de réceptacle au générateur de gaz pyrotechnique.
c) un générateur de gaz pyrotechnique.
d) un système de commande de sécurité d'allumage du générateur.

En attente de fonctionnement, la structure souple est repliée. Elle peut être placée dans un étui protecteur souple, déchirable au moment du gonflement - déploiement.

Le fonctionnement du système est initialisé par la détection d'un signal automatique ou commandé qui engendre l'allumage du générateur de gaz pyrotechnique. Les gaz remplissent la structure souple qui se déploie sous l'effet de la pression, en quelques millisecondes ou en quelques secondes.

Selon le type d'application, la structure souple peut rester gonflée de quelques minutes à quelques heures, voire quelques jours.

La structure souple est préférentiellement réalisée en tissus élaborés à l'aide de fils de polyamide, polyester, polyéthylène ... choisis selon les caractéristiques demandées en terme de résistance à la pression et à la température, de tenue aux environnements physiques et chimiques.

D'autres natures de tissus sont utilisées pour des applications spéciales, celles que les fibres aramide pour des sacs à très haute tenue mécanique et les fibres "haute température" pour la tenue au feu.

Ces tissus sont enduits pour assurer l'étanchéité mais aussi pour améliorer les tenues aux contraintes thermiques et chimiques.

Les produits d'enduction sont préférentiellement les "résines" silicone, polyuréthanne, PVC et des élastomères naturels.

Ces produits d'enduction sont déposés sur les tissus avant confection de la structure souple ou après sa fabrication. Les techniques industrielles préférentiellement utilisées sont le calandrage, la pulvérisation, le trempage et l'extrusion soufflage.

La structure souple est préférentiellement réalisée par assemblage de tissus de géométrie simple (plan et tube), mais elle peut aussi être réalisée par des techniques de tissage 3D ou formée par cotissage de parois ou plans différents.

L'assemblage est préférentiellement fait par soudure à ultrason ou à haute fréquence, par collage, par soudure à chaud et par couture.

La structure rigide servant de réceptacle au générateur résiste mécaniquement sous la pression de fonctionnement de celui-ci. Cette pression est variable selon le type de propergol utilisé. Elle peut varier entre 30 et 500 bars.

Cette structure rigide peut être en métal (acier, alliage d'aluminium ou alliage de zinc), mais elle est préférentiellement en matériaux composites" pour alléger le système et éviter le puits de chaleur et les risques de brûlures de la structure souple.

Cette structure "composite" rigide est préférentiellement en résine thermoplastique chargée de fibre de verre courte injectée, en tissu ou mat mis en forme au sein d'une matrice en résine thermoplastique ou thermodurcissable et ce, par thermoformage, nappage ou enroulement.

Le tissu de la structure souple peut être localement rigidifié et participer à la réalisation de la structure rigide réceptacle.

Le générateur de gaz pyrotechnique est préférentiellement constitué :
- d'un corps et d'un couvercle injectés en résine thermoplastique. Selon la durée de combustion, cette structure sera protégée thermiquement et comportera un orifice de sortie des gaz non érodable.
- d'un inflammateur électrique ou d'une amorce à percussion et leur charge de poudre d'allumage renforçatrice.
- du propergol dont la combustion génère les gaz.

Les choix du type de propergol et de la géométrie de ses éléments permettent d'obtenir des temps de combustion très variables de quelques millisecondes à plusieurs secondes.

Le gonflement de la structure gonflable peut donc être très rapide et maintenu au fur et à mesure du refroidissement des gaz.

Le réglage du débit gazeux du générateur de gaz est réalisé grâce à la forme évolutive des blocs de propergol ou par des allumages programmés ou différés de mini-générateurs.

L'allumage du propergol est assuré préférentiellement par un allumeur électrique de sécurité. Dans ce cas : Le système de déclenchement du gonflement - déploiement de la structure gonflable, est généré par un signal dont l'initiation est soit automatique, soit commandée par un opérateur.

Sa transmission est faite préférentiellement par des liaisons électriques ou fibre optique, mais elle peut être aussi réalisée par des signaux transitant sans liaison (infrarouge, ultrason, radio ...)

Une pile batterie longue durée est suffisante pour assurer la réception des signaux et délivrer l'énergie électrique d'initiation de l'inflammateur électrique.

L'allumage du propergol peut être assuré par la percussion d'une amorce. Cette percussion est préférentiellement commandée manuellement par l'opérateur, mais elle peut aussi être commandée à distance et transitée par un système à percussion de type électroaimant.

L'originalité de la conception et de la construction des structures souples étanches gonflables par un générateur de gaz pyrotechnique répondant à différentes utilisations, ressortira des descriptions et des différents matériels présentés ci-après. Ces descriptions sont illustratrices et non limitatives.

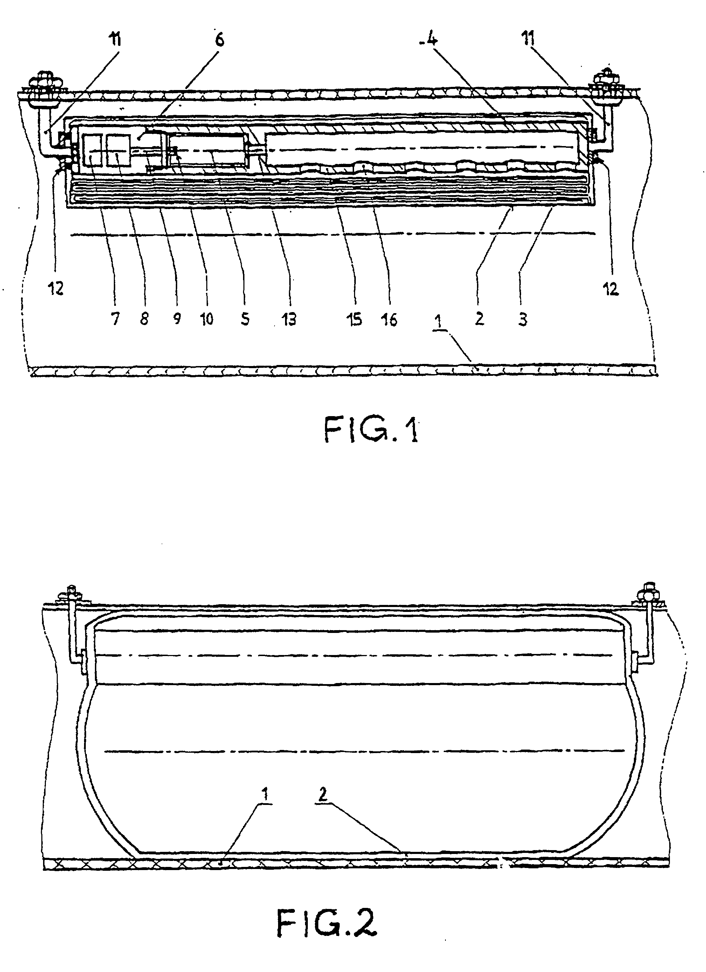

Sur la figure 1, l'obturateur de canalisation réalisé à l'aide d'une structure souple étanche gonflable par un générateur de gaz pyrotechnique est en attente de fonctionnement. L'obturateur souple (2) est placé dans une canalisation (1); il est replié (3) autour du système générateur de gaz (4). L'ensemble est préférentiellement fixé à la canalisation (1) à l'aide de deux attaches (11).

Le système générateur de gaz (4) est constitué d'un tube diffuseur (15) dans lequel on place un générateur de gaz (5) et un bouchon allumeur (6) qui contient le récepteur de signal de mise à feu (7), la source d'énergie (8), la liaison électrique (9) optique ou mécanique à l'allumeur (10) du générateur de gaz (5).

Le système générateur de gaz (4) peut être situé à l'extérieur du sac gonflable (2).

L'étanchéité de la liaison entre le sac (2) et les attaches (11) est assuré par des joints (12).

Sur la figure 2, l'obturateur (2) souple étanche gonflable par un générateur de gaz pyrotechnique est gonflé et tout écoulement est bloqué dans la canalisation (1).

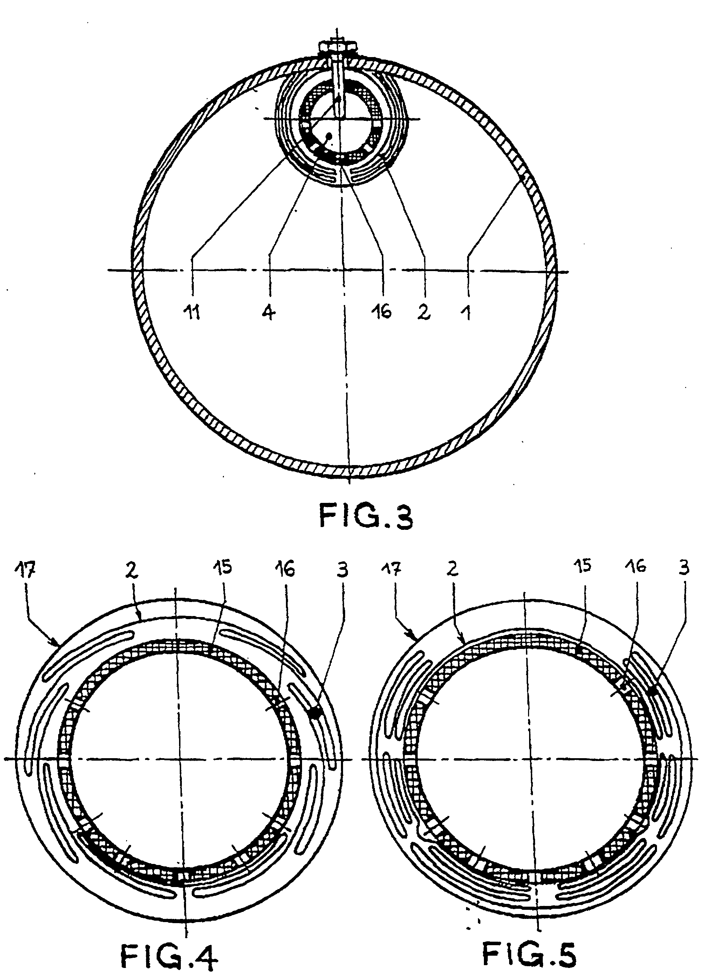

La figure 3 présente une vue en coupe de la canalisation (1) équipée d'un sac (2) replié prêt à l'emploi avec un pliage simple en deux demi-coquilles, autour du générateur de gaz (4) dont les gaz remplissent le sac (2) au travers des orifices (16).

Les figures 4 et 5 présentent d'autres exemples de pliage possibles sans sortir de l'invention.

Afin de maintenir le sac (2) replié, on le place préférentiellement dans un manchon (17) réalisé à l'aide d'un film thermoplastique résistant aux effluents (ex : polyester). Sous l'effet de la pression, ce films se rompt et laisse le sac se déployer.

Le tissu du sac est préférentiellement en fibre thermoplastique, telle que polyester ou polyamide, ou en fibre de verre. Dans tous les cas, pour son étanchéité, il est enduit d'un film préférentiellemenc en PVC ou élastomère.

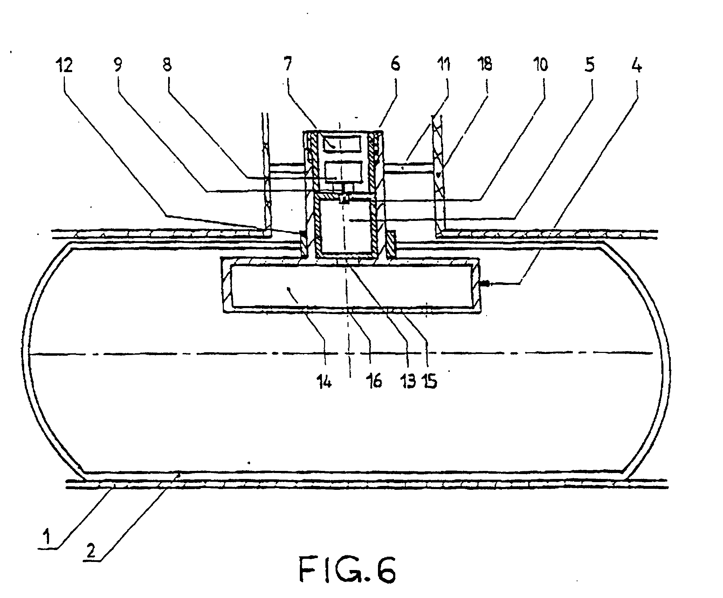

La figure 6 présente une des autres possibilités de construction, dans le cas où l'on peut utiliser un regard de visite (18).

Un logement vertical contient le récepteur du signal de mise à feu (7), la source d'énergie (8), le générateur de gaz (5) et son allumage (10). En attente de fonctionnement, le sac (2) est replié autour du tube diffuseur (15) contenant la chambre de détente (14) et son entrée calibrée (13).

Le système est préférentiellement réutilisable. Après avoir ouvert un bouchon de purge, on sort le système de la canalisation en démontant les attaches (11). On retire le bouchon (6) puis le générateur (5). On remet un générateur neuf (5), on referme le boucnon (6), on replie le sac (2) et on le place dans un manchon de maintien (17), on remonte le système dans la canalisation (1) à l'aide des attaches (11).

L'obturateur de canalisation gonflable par générateur de gaz pyrotechnique peut n'être introduit dans la canalisation qu'au moment de l'intervention et de son gonflement.

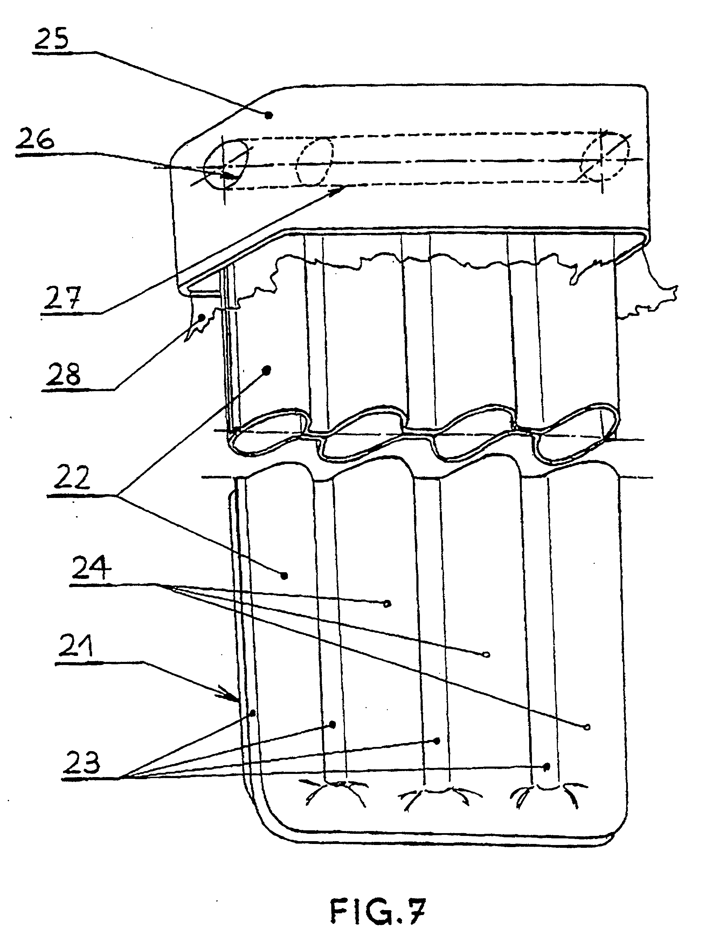

Sur la figure 7, la barrière anti-feu déployable par gonflement à l'aide d'un générateur de gaz pyrotechnique est en position déployée. Cette barrière (21) se présente sous la forme d'un matelas constitué de deux parois (22) de tissu enduit étanche à l'intérieur et ignifugé ou protégé thermiquement à l'extérieur. On utilise préférentiellement un tissu en fibres anti-feu. Les deux parois (22) sont assemblées régulièrement selon des rainures (23) et ce, préférentiellement par soudure à ultrason, à haute fréquence ou à chaud.

La barrière (21) gonflée présente des boudins raidisseurs (24) qui communiquent au système générateur de gaz (26) au travers d'un diffuseur à filtre (27).

En attente de fonctionnement, la barrière (21) est repliée dans le boîtier (25) fermé par un film opercule (28).

Le système générateur de gaz (26) de la barrière anti-feu déployable par générateur de gaz pyrotechnique est préférentiellement de construction semblable à celle de l'obturateur souple étanche gonflable par générateur de gaz pyrotechnique (4).

Il est donc constitué préférentiellement d'un récepteur de signal de fonctionnement, d'une source d'énergie et d'un générateur de gaz pyrotechnique.

Après identification de la présence d'un sinistre, le déploiement de la/des barrière(s) anti-feu est initié soit manuellement, soit automatiquement par un capteur.

L'initiateur allume la charge de poudre du système générateur de gaz (6). Les gaz générés par la combustion de cette poudre dans la chambre sont dirigés, à travers le filtre diffuseur (27) vers la structure gonflable (22) de la barrière (21).

La barrière (21) sous l'effet de la pression, commence à pousser la membrane (28) de stockage qui se déchire, permettant ainsi le déploiement du matelas (22) et le gonflage du réseau de boudins (24) qui assure la rigidité de la barrière sans empêcher le passage du personnel voulant évacuer les lieux.

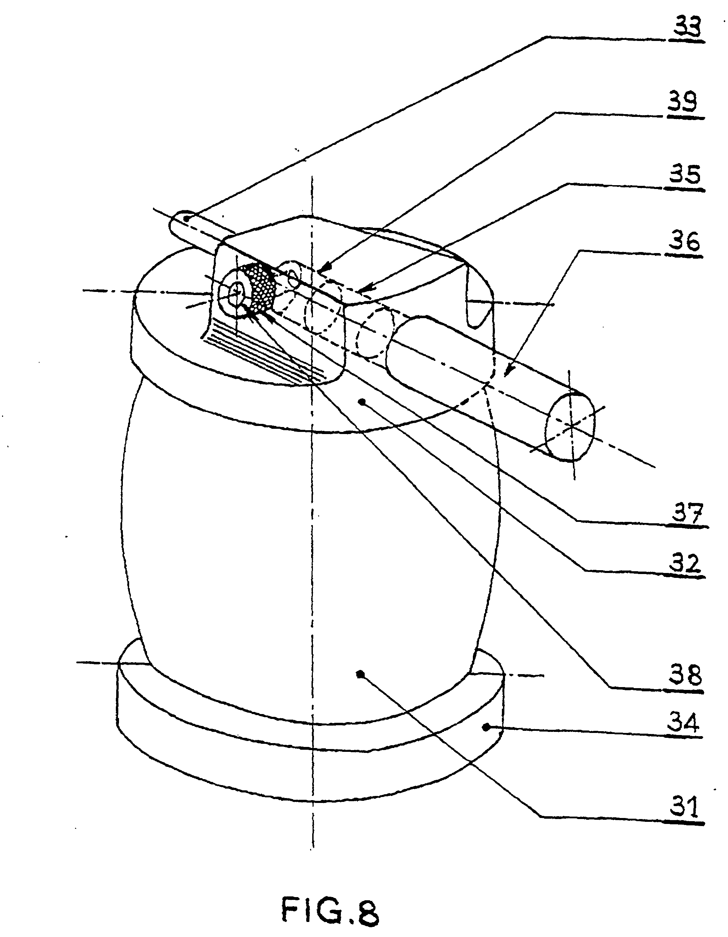

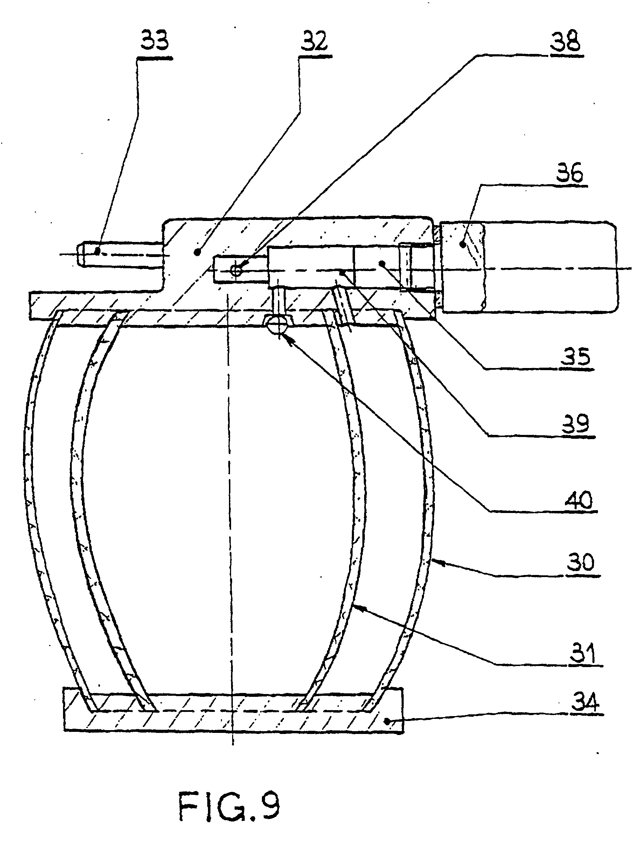

Les figures 8 et 9 présentent le cric gonflable par générateur de gaz pyrotechnique en position "gonflé". Il est préférentiellement constitué d'une structure tissu tubulaire (30) enduite pour étanchéification, dont la partie inférieure est renforcée à l'aide d'un fond (34) en élastomère ou thermoplastique.

La partie supérieure est fermée par un opercule (32) en élastomère ou thermoplastique, équipé du système générateur de gaz (39), du bouchon de purge (37) et de la languette de positionnement (33) sur le châssis du véhicule.

Le bouchon de purge (37) est équipé d'une valve de sécurité (38). Le système générateur de gaz (39) contient le générateur de gaz (35) et son système d'allumage à percussion ou électrique (36).

La structure tubulaire (30) peut être doublée d'une structure tubulaire intérieure (31) équipée d'une valve de gonflage anti-retour (40) assurant la sécurité en cas de dégonflage accidentel de la structure tubulaire de base (30).

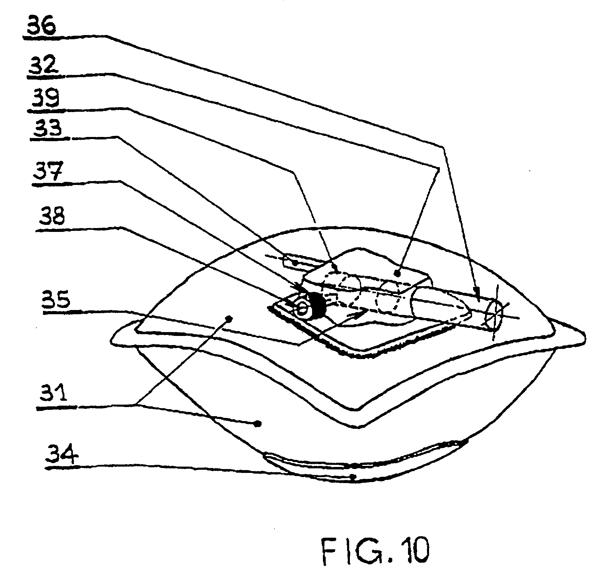

La figure 10 présente une variante de forme de la structure souple du cric gonflable par générateur de gaz pyrotechnique. Elle est réalisée par assemblage soudé de deux flasques (41) planes, dont la géométrie à plat est circulaire ou carrée.

Le cric gonflable est d'abord positionné sous le véhicule; la semelle (34) doit être orientée vers le sol.

La languette (33) est introduite dans le logement prévu à cet effet sous la caisse du véhicule.

On actionne manuellement le système d'initiation (36) afin de déclencher la mise à feu du générateur de gaz (35).

Le déploiement du cric s'effectue (3 à 5 secondes environ) et le véhicule se soulève permettant l'intervention de l'opérateur (démontage de la roue crevée et remontage de la roue de secours; insertion d'un système de désenlisage...).

Une fois l'opération terminée, on dégonfle le cric en ouvrant la purge (37), ce qui a pour effet de faire redescendre la voiture.

On retire le cric dégonflé et on remplace le générateur utilisé.

L'invention permet la réalisation de nombreux autres équipements gonflables à l'aide d'un générateur de gaz pyrotechnique que nous ne pouvons décrire à titre d'exemple.

Parmi ces équipements, on peut citer sans que la liste ne soit limitative :
- des vérins gonflables permettant, en particulier, d'effectuer :
   . la désincarcération de personnes prises lors d'éboulement de bâtiment, sous un véhicule, sous une lourde charge, ...
   . la mise en place ou le relevage de matériel lourd, à parois ou équipement externe fragile.
- des obturateurs gonflables de fuites
- des obturateurs gonflables d'avaloir ou de passage d'écoulement
- des canalisations gonflables de guidage de rejet de liquide polluant
- des bassins gonflables de rétention d'urgence de rejet polluant
- des barrières antipollution gonflables et flottantes
- des passerelles de secours gonflables et déployables.

## Revendications

1. Equipement comprenant une structure souple étanche (9) gonflable, **caractérisé en ce qu'**il comporte un générateur de gaz pyrotechnique (4) qui assure le gonflage de cette structure souple.

2. Equipement selon la revendication 1, **caractérisé en ce que** la structure souple (2) est en tissu de fils de polyamide, polyester, aramide ou verre, enduit d'un revêtement de PVC, silicone ou élastomère synthétique ou naturel.

3. Equipement selon la revendication 1, **caractérisé en ce que** les générateurs de gaz pyrotechniques ont des débits gazeux réglables par des évolutions de formes des blocs propulsifs ou des allumages successifs programmés de micro-générateurs.

4. Equipement selon l'une quelconque des revendications 1 à 3, **caractérisé en ce que** la structure constitue un obturateur souple gonflable de canalisation (2) replié autour du diffuseur (15) contenant le générateur de gaz pyrotecnnique (4).

5. Equipement selon la revendication 4, **caractérisé en ce que** le signal d'allumage du générateur de gaz pyrotechnique (4) est délivré par un détecteur automatique de pollution ou par une commande volontaire à distance.

6. Equipement selon l'une quelconque des revendications 1 à 3, **caractérisée en ce que** la structure souple gonflable (21) constitue une barrière anti feu déployable fabriquée à l'aide d'un tissu en fibres anti-feu, en tissu ignifugé ou en tissu protégé thermiquement.

7. Equipement selon l'une quelconque des revendications 1 à 3, **caractérisé en ce que** la structure souple gonflable (30) constitue un cric gonflable, équipée en sa partie supérieure, d'un dispositif de liaison (33) ou d'appui avec la structure du véhicule, d'une poignée (36) d'allumage du générateur de gaz pyrotechnique (39) à percussion et d'un bouchon de purge (37) comprenant une valve de sécurité (38).

8. Equipement selon l'une des revendications 1 à 3, **caractérisés en ce que** la structure souple constitue un vérin gonflable, un obturateur gonflable, une barrière gonflable, une passerelle de secours gonflable, gonflés par des générateurs de gaz rechargeables à allumage autonome, électrique ou à percussion.

## Patentansprüche

1. Ausrüstung mit einer weichen, dichten aufblasbaren Struktur (2), **dadurch gekennzeichnet, daß** sie einen pyrotechnischen Gaserzeuger (4) aufweist, der das Aufblasen dieser weichen Struktur ermöglicht.

2. Ausrüstung nach Anspruch 1, **dadurch gekennzeichnet, daß** die weiche Struktur (2) ein Gewebe aus Polyamid-, Polyester- Aramid- oder Glasfasern mit einem Überzug aus PVC, Silikon oder einem synthetischen oder natürlichen Elastomer ist.

3. Ausrüstung nach Anspruch 1, **dadurch gekennzeichnet, daß** die pyrotechnischen Gaserzeuger Gaserzeugungsraten haben, die durch Formentwicklungen von Treibblöcken oder programmierte aufeinanderfolgende Zündungen von Mikrogeneratoren einstellbar sind.

4. Ausrüstung nach einem der Ansprüche 1 bis 3, **dadurch gekennzeichnet, daß** die Struktur einen weichen, aufblasbaren Leitungsverschluß (2) bildet, der um den Diffusor (15) gefaltet ist, der den pyrotechnischen Gaserzeuger (4) bildet.

5. Ausrüstung nach Anspruch 4, **dadurch gekennzeichnet, daß** das Zündsignal für den pyrotechnischen Gaserzeuger (4) von einem automatischen Schadstoffdetektor oder einer Fernsteuerung geliefert wird.

6. Ausrüstung nach einem der Ansprüche 1 bis 3, **dadurch gekennzeichnet, daß** die weiche aufblasbare Struktur (21) eine entfaltbare Brandschutzbarriere bildet, die aus einem Gewebe aus feuerhemmenden Fasern, einem flammenhemmenden Gewebe oder einem wärmegeschützten Gewebe hergestellt ist.

7. Ausrüstung nach einem der Ansprüche 1 bis 3, **dadurch gekennzeichnet, daß** die weiche aufblasbare Struktur (30) einen aufblasbaren Wagenheber bildet, der in seinem oberen Bereich eine Einrichtung (33) zur Verbindung mit oder Abstützung an dem Fahrzeugaufbau, einen Auslöser (36) für einen Perkussionszünder des Gaserzeugers und einen Entleerungsstöpsel (37) mit einem Sicherheitsventil (38) aufweist.

8. Ausrüstung nach einem der Ansprüche 1 bis 3, **dadurch gekennzeichnet, daß** die weiche Struktur einen aufblasbaren Stellantrieb, einen aufblasbaren Verschluß, eine aufblasbare Barriere, eine aufblasbare Sicherheitsplanke bildet, aufgeblasen von wiederaufladbaren Gaserzeugern mit autonomer, elektrischer oder Perkussionszündung.

## Claims

1. Equipment constituted by an airtight inflatable flexible structure (9), **characterised in that** it includes a pyrotechnic gas generator (4) which provides for inflation of said flexible structure.

2. Equipment according to claim 1, **characterised in that** said flexible structure (2) is in polyamide, polyester, aramide or glass fibre fabric impregnated with a PVC, silicone or synthetic or natural elastomer coating.

3. Equipment according to claim 1, **characterised in that** pyrotechnic gas generators have their gas output adjustable thanks to variations in shape of propellant blocks or to successive programmed ignitions of micro-generators.

4. Equipment according to any one of claims 1-3, **characterised in that** said structure constitutes a flexible inflatable closing member for a duct or conduit (2), folded around a distributor (15) containing said pyrotechnic gas generator (4).

5. The equipment according to claim 4, **characterised in** the ignition signal for the pyrotechnic gas generator (4) is supplied by an automatic pollution detector or by intentional remote control.

6. The equipment according to any one of claims 1-3, **characterised in that** said flexible inflatable structure (21) constitutes a firewall able to unfold which is manufactured using a fireproof fiber fabric, a fireproofed fabric or a thermally protected fabric.

7. The equipment according to any one of claims 1-3, **characterised in that** said flexible inflatable structure (30) constitutes an inflatable lifting jack fitted at the upper portion thereof with a means (33) for linking it or locating it against the structure of the vehicle, and comprising a handle (36) for ignition of a pyrotechnic gas generator (39) using percussion, and a purge stopper (37) comprising a safety valve (38).

8. The equipment according to any one of claims 1-3, **characterised in that** said flexible structure constitutes an inflatable jacking means, an inflatable closing member, an inflatable barrier, an inflatable emergency gang plank, which are inflated by a rechargeable gas generator having autonomous, electrical or percussion ignition means.
